# EUROPEAN PATENT APPLICATION

(11) **EP 4 280 171 A1**
(43) Date of publication of application: **22.11.2023**
(21) Application number: 22174449.3
(22) Date of filing: 19.05.2022
(51) Int. Cl.: G06V 10/70, G06V 10/774

(54) **ANALYSING BIOMATERIALS**

(71) Applicant: Bühler AG, 9240 Uzwil (CH)
(72) Inventor: NAGARAJA, Hemanth, 8406 Winterthur (CH); BASHFORD, Stuart, London, E16 2BF (GB)
(74) Representative: Page White Farrer

(57) **Abstract**

Method and apparatus for analysing biomaterial are disclosed. The method comprises acquiring image data of a biomaterial sample from an image data generating apparatus, determining information of components of the biomaterial sample based on phenotypical classification of the image data using an artificial intelligence based visual classification algorithm, and generating information of contents of the biomaterial sample based on the phenotypical classification.

## Description

The present disclosure relates to methods, apparatuses and computer program products for analysing biomaterials.

A particular example of biomaterials is food products and raw materials for food products. These are commonly referred herein as food materials. Food materials are cultivated, treated, traded, transported, stored, and otherwise handled and processed in large quantities. Handling and trading can take place in various stages of a food production and trading chain. Examples of raw materials and food products comprise grains and cereals, vegetables, fruits, berries, nuts and so on crops, oils, meat, dairy, flours, etc. Raw materials for food products can have different varieties, come from different sources and geographical areas, be of differing quality and so on. Using rice as an example, different types of rice such as Basmati, Sugandha, Jasmine, Calasparra, Arborio and so forth are commonly cultivated. E.g., Basmati rice in turn has different varieties.

Accurate knowledge of the type, variety, purity, quality and composition of food materials is important. The ability to test composition and purity of raw materials is important. Errors in raw material assessment can have significant implications on quality, cost, liability, product reputation and so on.

Testing can be used for tracing and analysis of the materials. Testing can involve sensory evaluation to check the contents of a lot of biomaterial, that a lot of the biomaterial is what it should be, the quality of the lot is acceptable for further processing and that the end product can be put on general sale and consumption. Laboratory analysis may be necessary. Testing can comprise manual sensory inspection and deoxyribonucleic acid (DNA) analysis. The sensory testing requires reliance on skilled personnel. DNA based analyses in general comprise sending a sample to a laboratory operated internally or by a third-party operator. The analytical DNA based procedures of food materials use special equipment and skilled personnel to perform the DNA based testing. The current analytical procedures thus need skilled personnel to perform sample-based testing.

Time critical supply chain and/or process control decisions would benefit from more efficient and faster turnaround times. Also, the quality of the results may become compromised due to the time it takes between taking a sample and getting the results from testing and analysis of the sample. Human errors are possible. Moving the sample around in non-optimal conditions may come with increased risk of contamination.

In accordance with an aspect there is provided a method of analysing biomaterial, the method comprising acquiring image data of a biomaterial sample from an image data generating apparatus, determining information of components of the biomaterial sample based on phenotypical classification of the image data using an artificial intelligence based visual classification algorithm, and generating information of contents of the biomaterial sample based on the phenotypical classification.

According to a more specific aspect individual components in the image data of the biomaterial sample are identified for separated analysis of the individual components.

The image data may be generated in an onsite location, the method comprising receiving the image data from the onsite location at a remote data processing apparatus and performing the analysis steps at the remote data processing apparatus. Information of the composition of the biomaterial sample may be sent to the onsite location.

A digital certificate may be generated based on the analysis of the biomaterial sample. A digital report may be generated based on the analysis of the biomaterial sample. Information generated for the biomaterial sample based on the analysis may be stored into a database.

The visual classification algorithm may be trained using a library of prelabelled images of possible components of the biomaterial sample. Training data for the visual classification algorithm may be generated based on DNA testing of possible components of the biomaterial sample.

Image data may be generated by apparatus comprising a flatbed scanner and/or at least one digital camera.

The biomaterial may comprises food material. The image data may be captured onsite in a stage of a food production chain.

An input signal for a controller of a biomaterial processing system may be generated based on the results of the analysis and the processing system may be controlled at least in part based on the input signal.

According to another aspect there is provided an apparatus for analysing biomaterial, the apparatus comprising at least one processor and at least one memory including a computer program code, the at least one memory and computer program code configured to, with the at least one processor, cause the apparatus at least to acquire image data of a biomaterial sample from an image data generating apparatus, determine information of components of the biomaterial sample based on phenotypical classification of the image data using an artificial intelligence based visual classification algorithm, and generate information of contents of the biomaterial sample based on the phenotypical classification.

The image data generation apparatus may be provided in an onsite location. The apparatus can be configured to receive image data from the onsite location, perform the analysis steps, and communicate data based on the analysis to the onsite location, a database and/or a data processing device in a third location.

The image data generating apparatus may comprise a flatbed scanner and/or at least one digital camera.

The apparatus may be configured to generate an input signal for a controller of a biomaterial processing system based on the results of the analysis, wherein the processing system is controlled at least in part based on the input signal.

The apparatus may be configured to identify individual components in the image data of the biomaterial sample for separated analysis of the individual components.

A computer software product embodying at least a part of the herein described analysis functions may also be provided. In accordance with an aspect a computer program comprises instructions for causing performance of the methods described herein.

Some aspects will now be described in further detail, by way of example only, with reference to the following examples and accompanying drawings, in which:
Figures 1 and 2 illustrate schematic examples of systems comprising an image data generation apparatus and a remote data processing apparatus;
Figure 3 is an example of a data processor apparatus;
Figures 4A, 4B, 4C and 4B show examples of visual differences between different grains of rice;
Figures 5A, 5B, and 5C show examples of visual differences between differently processed grains of rice;
Figure 6 shows an example of identified individual grains and classification thereof;
Figure 7 is a flowchart according to an example;
Figure 8 shows an example of a process control arrangement; and
Figures 9, 10 and 11 show results of experiments.

The following description gives an exemplifying description of some possibilities to practise the invention. Although the specification may refer to "an", "one", or "some" examples or embodiment(s) in several locations of the text, this does not necessarily mean that each reference is made to the same example of embodiment(s), or that a particular feature only applies to a single example or embodiment. Single features of different examples and embodiments may also be combined to provide other embodiments.

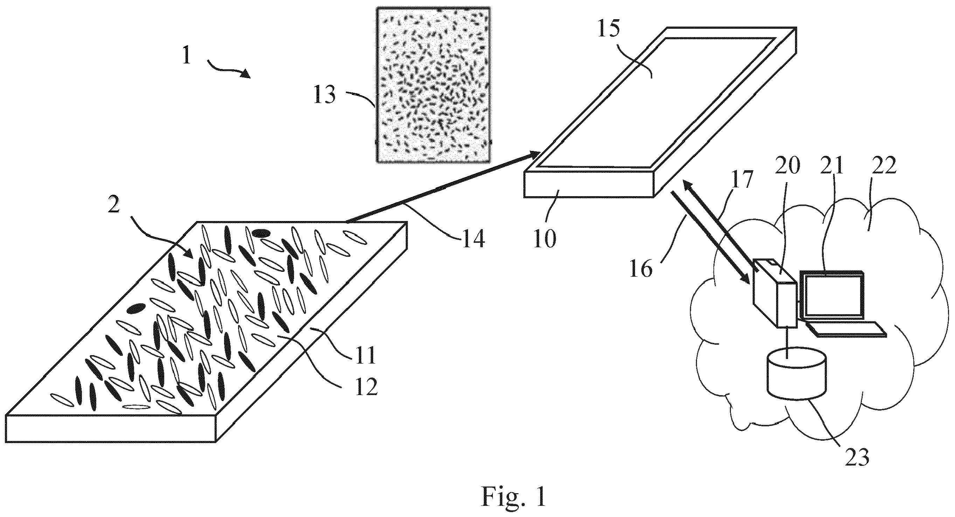

Figure 1 shows a schematic example of a testing and analysis arrangement 1 where the herein described principles can be embodied. A locally operable onsite apparatus 1 provides a hardware processing platform configured to receive a sample 2 of biomaterial and generate image data thereof. The biomaterial can comprise, for example raw material for a food product such as grains, for example grains of rice or wheat, peanuts, beans and so on. The apparatus 1 is configured for enabling onsite sampling. Thew apparatus can also be configured for onsite viewing of the results of the analysis on the samples.

The onsite hardware may consist of a flatbed scanner 11 connected to a user device 10 with wireless or wired data connection 14. The user device 10 can provide a local onsite data processing facility that may be configured to run any required software for the image data capturing and for generation and communication of the image data. The user device may also be configured for example for pre-processing image data from the scanner 11 prior to sending the image data for analysis to a remote data processing apparatus 20. The pre-processing may involve operations such as filtering, cropping, resolution adjustment, rejecting unclear data and so on.

The onsite apparatus 1 can be moveable within a site and/or from site to site. The apparatus can be configured to be small and lightweight enough to be moveable. A handheld or otherwise mobile onsite apparatus may be configured to perform the steps of image data generation and communication. The user device 10 may comprise, for example, a tablet computer provided with cellular communication capabilities or a WiFi chip, a smart phone, a laptop computer or the like.

A user can spread a sample 2 of grain on the flatbed 12 of the scanner 11 and start the software application of the user device 10. Data for processing and reporting purposes such as supplier name, batch identity (ID), location ID, timestamp and so on can be acquired either automatically from appropriate source of data or via a user interface, in the example via a touch screen 15. A software program running on the user device can acquire an image 13 of the grains taken by the flatbed scanner 11 via data link 14 and communicate the image data via data link 16 to the data processing entity 20. The data signal can be communicated according to any appropriate communication protocol. The communication can be via wireless and/or wired communications. An appropriate security protocol or protocols can be used to encrypt and/or tunnel the communications.

The remote data processing apparatus 20 can comprise a suitable computer device, for example a server, configured to perform the analysis functions as described herein. The data processing apparatus 20 can be connected to / be a part of wider data communications system, such as an Intranet or the Internet. Functions of the data processor apparatus 20 can also be at least in part provided in a cloud platform 22 or other virtualized environment. Appropriate gateways can be provided between different environments.

The data processing apparatus 20 is configured to run a pretrained visual classification algorithm to analyse the uploaded image data and generate a compositional report and possible other information based on the sample. The report can be sent back electronically via data link 17 to the user device 10. Stored images and results of analysis can also be made available for third party certification of the output. For example, the results can be stored into and made available from a database 23.

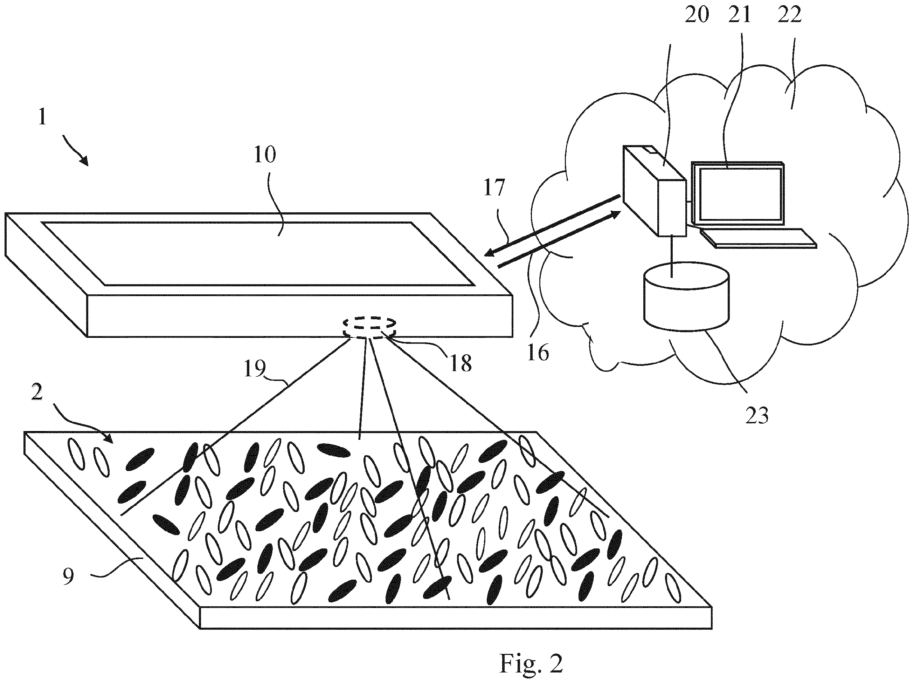

The imaging apparatus may also comprise a digital camera. The camera may be integrated with the user device 10. Figure 2 shows an example of a user device comprising a digital camera 18 and configured for data communications via data links 16, 17 with a remote data processing apparatus 20, as explained above. The user device 10 can be used to capture an image of a biomaterial sample 2 on a suitable imaging platform 9 providing an imaging area indicated by lines 19. Additional equipment such as lighting equipment may also be provided.

Digital camera equipment may also be provided separately from the user device or other appropriate onsite data communication apparatus.

The remote data processing apparatus 20 can be configured to process image data from a large number and variety of onsite apparatuses. The data processing apparatus 20 may comprise a user interface 21 such as a display and/or a keyboard. The data processing apparatus can comprise or be connected to at least one database 23. Analytics on the cloud platform can process the data signals received via the data link 16 after initial training based on reference and/or training data stored in the at least one database 23.

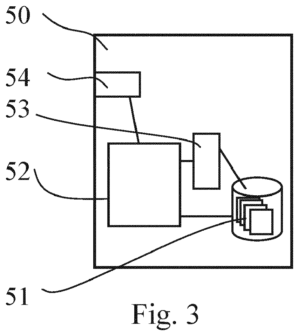

The data processing functionalities of the data processing apparatus 20 can comprise any appropriate computing arrangement comprising at least one processor, memory, software and internal circuitry and components necessary to perform the tasks configured to implement at least some of the herein described features. Figure 3 shows an example of internal components of a data processor arrangement on a board 50 and comprising processor(s) 52, 53 and memory or memories 51. Figure 3 further shows connections between the elements of the apparatus and an interface 54 for connecting the data processing apparatus to other components. For example, in the apparatus 20 of Figures 1 and 2 the interface would be for communication with the local user device 10, the user interface 21 and the database 23. The at least one memory may comprise at least one ROM and/or at least one RAM. The apparatus may comprise other possible components for use in software and hardware aided execution of tasks it is designed to perform. The at least one processor can be coupled to the at least one memory. The at least one processor may be configured to execute an appropriate software code to implement one or more of the following aspects. The software code may be stored in the at least one memory.

The user device 10 may also be configured for reception of data on results from the remote data processing apparatus 20 via the data link 17. For example, data indicative of the composition of the sample, a digital certificate, a report and other information available from the analysis can be received via the link 17 from the remote data processing apparatus 20. Results of the analysis can be displayed on the display screen 15. Configuration data for the local apparatus may also be provided via the data link 17.

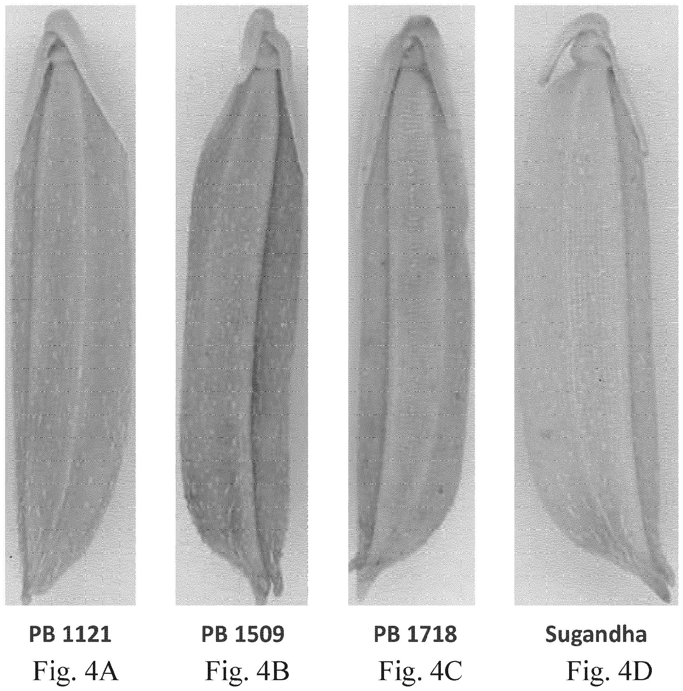

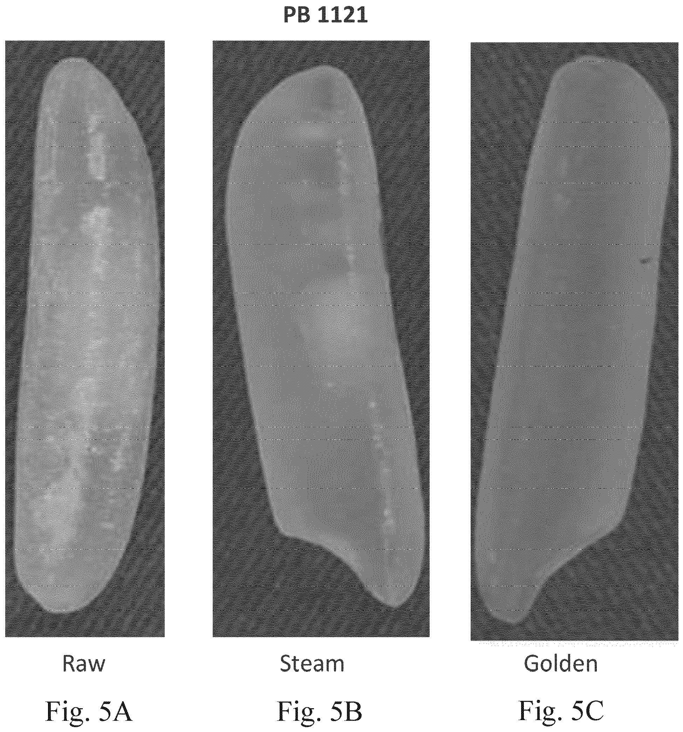

Food production chains typically employ sensory inspection of small samples as a quality assurance method for making supply chain decisions. Analysis of the biomaterial can be required for contractual, legal and regulatory purposes. Figures 4 and 5 illustrate examples of possible visual differences in grains, and more particularly grains of rice. Figures 4A - 4C show enlarged examples of common Basmati paddy grains. Figure 4D shows a non-Basmati paddy grain. Certain minute visual differences are evident between the different grains upon careful inspection of the pictures. Figures 5A - 5C in turn show enlarged examples of a common basmati rice variety of Figure 4A with minute visual differences between natural (Fig. 5A) and processed (Figs. 5B and 5C) grains of Basmati rice.

In Basmati rice value chain, experienced quality control professionals take a small sample of rice (typically about 25g) from a lot of rice and perform visual analysis of the sample to establish phenotypic composition and/or process driven visual changes. Compositional data is needed to prevent mixing of genotypically similar non-Basmati rice into Basmati rice lots. This can be desired to maintain purity, quality and consequently price. Compositional data can be used to tune blending of different rice phenotypes during, e.g., milling of rice to deliver the required specifications. Legal requirements of labelling can require that to carry Basmati tag a rice lot shall contain a certain minimum % of Basmati grains. For example, 93% has been specified in the United Kingdom as the threshold for labelling as Basmati. Different phenotypes of basmati rice and different processing have unique cooking properties. The lot composition information is important for quality assessment and pricing decisions. Two main techniques used for compositional fingerprinting of samples comprise methods based manual testing and DNA testing.

Manual methods are typically based on visual inspection of kernel morphological differences. The analysis relies on highly trained quality assurance professionals looking at each grain of a small sample to make the phenotypic judgement call. The training is intensive, and the time necessary to train a quality professional to identify all possible varieties of Basmati rice, their common adulterants and processing related visual changes is typically three to four years. The sampling rate can be very low. The inspection work is repetitive and stressful. This can result in low sensitivity and accuracy of results. A manual analysis is also subjective. The analysis results are typically recorded in a paper form which does not lend itself to long range historical analysis or benchmarking of the supply chain.

DNA based methods are based on genetical differences. The DNA fingerprinting includes a series of steps to extract the genetic material from a sample, purify the DNA, amplify the regions of interest and compare the amplification signals against a reference benchmark to quantify the starting DNA amount. Because of the specialized nature of equipment, personnel and infrastructure needed to run DNA analyses, food processors typically outsource these tests to third party laboratories. Cost per test can be high due to special requirements in hardware, laboratory conditions and people. Time from sampling to result can be long. Typically five to six days are needed from taking a sample to receiving the results. Time critical supply chain decisions are thus difficult based on DNA testing. DNA based tests may only be suitable for detecting common groups of grains. Development time for new DNA tests can also be long and intensive, and as a result new grain varieties coming into grain market are not detected immediately. DNA tests cannot necessarily separate closely related grain species which nevertheless may have quality, property and price differences.

Current testing arrangements can cause considerable auditing burden and testing costs across the value chain. Suppliers, buyers and possible middlemen may all need to perform similar tests at their respective locations, and there is limited collaboration across the value chain. An end product certificate of authenticity may be needed. This is typically obtained by sending a small grain sample to an external lab. A small grain sample carries the uncertainty of not being representative of the grain lot. Food processors may not afford frequent sampling due the high external costs and delays. An onsite authentication device that can be operated by the mills themselves lends itself to frequent testing and building a brand proposition based on purity.

A hardware platform configured to capture images of samples and generate based thereon image data of samples of grains can be used as a part of an improved solution for the sampling and analysis. Figures 1 and 2 show two schematic examples of the platforms. The local onsite apparatus can send the image data in the form it is captured to the remote data processing apparatus. Alternatively, the local data processing device may provide some pre-processing of the image data prior to sending of the image data for analysis processing.

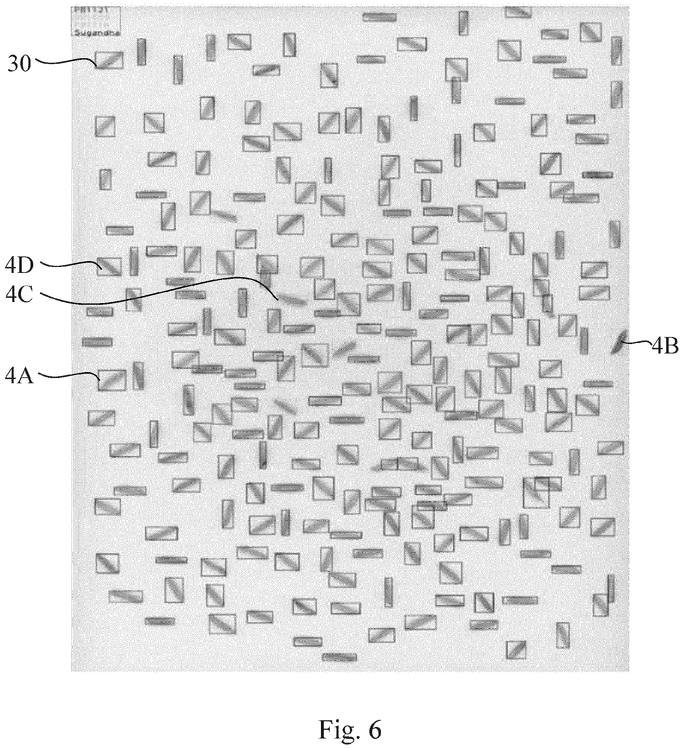

Figure 6 illustrates a part of a captured image of a sample containing the four different rice grains shown in Figures 4A - 4D. A visual inspection software has separated each individual rice grain from the image data. The objects visible in individual image blocks 30 can be analysed using artificial intelligence (Al) based classification algorithm. Based on the analysis the grains, or at least all grains that could be identified, are classified into respective grain types. Examples of the identified types PB 1121, PB 1509, PB 1718 and Sugandha are indicated in Figure 6 by references 4A, 4B, 4C and 4D corresponding to the types of Figures 4A, 4B, 4C and 4D.

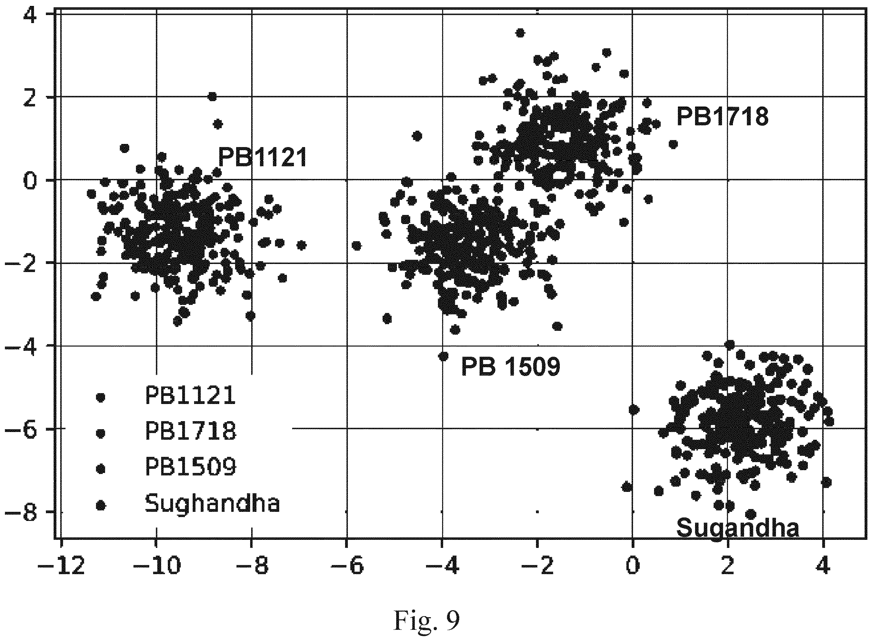

Figure 6 is a real-life image from performed testing on rice samples. Numerical results of the tests are described later in this specification with reference to Figures 9, 10 And 11.

The analysis processing can comprise use of artificial intelligence (Al) for classification of the components of the biomaterial. The onsite hardware platform can be provided by a reasonably lightweight and simple local apparatus while the AI based analysis can be provided in a remote location by a more resourceful data processing apparatus.

The AI functions can be provided by convolutional neural networks (CNN). A CNN is a deep learning artificial layered neural network. CNNs are commonly applied to analyse visual imagery and used for applications such as image and video recognition, recommender systems, image classification, object detection, and image segmentation. CNNs take advantage of the hierarchical patterns in data and assemble patterns of increasing complexity using smaller and simpler patterns embossed in their filters. CNNs use relatively little pre-processing compared to other image classification algorithms. The network learns to optimize the filters (or kernels) through automated learning, whereas in more traditional algorithms these filters are hand-engineered. This independence from prior knowledge and human intervention in feature extraction can provide advantage in applications such as analysis of material.

Training of the AI algorithm can be provided with a library of prelabelled grain images. Testing and optimization of the classification algorithm can be based on pre-known randomized samples. A pretrained visual classification algorithm can be trained based on relatively small samples of the biomaterial of interest.

Prelabelled image data of different components and features can be generated and the neural networks trained based on deoxyribonucleic acid (DNA) testing. A DNA based analytical procedure can be provided for example based on polymerase chain reaction (PCR) testing of the materials.

The initial training stage can involve processing of a large number of samples and looking at a large number of features in each type of a grain or other component of the samples. For example, about a couple of thousand grains may be analysed and processed for the training purposes so that the system learns to classify the grains. In use the analysis system can use, in addition to the initial training data, features learned in previous analysis rounds in further training of the algorithm.

In accordance with a possibility image data is sent to a cloud platform. Analytics on the cloud platform can interpret the image data and deliver a digital certificate containing desired sample quality information. For example, information on composition based on genotype of grain, colour, length parameters, process related visual signatures and so on may be included in a digital certificate.

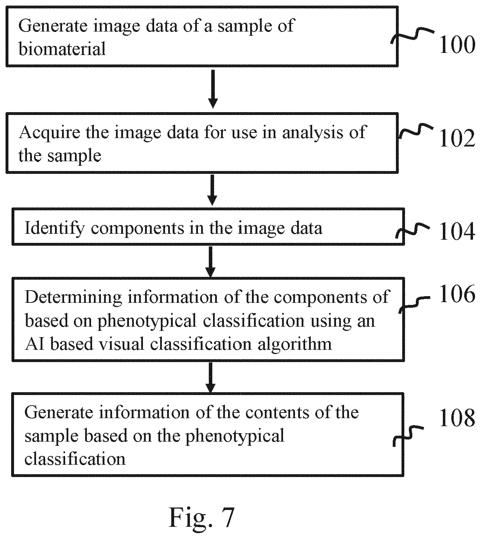

Figure 7 shows a flowchart according to an example of analysing biomaterial. In the shown process an apparatus operable at the location of the biomaterial captures and generates image data of a biomaterial sample at step 100. The image data of the biomaterial sample is acquired from the image data generating apparatus at step 102. Individual components may then be identified from the image data of the biomaterial sample at 104. The identified components can be analysed separately in determining information of the components based on phenotypical classification of the image data using an artificial intelligence (Al) based visual classification algorithm at 106. The AI based visual classification algorithm can be trained apriori with a large number, e.g., thousands of human expert labelled images and/or DNA analyses samples. Information of the contents of the biomaterial sample is generated at 108 based on the phenotypical classification.

The image data can be generated in an onsite location, and the image data can be received from the onsite location at a remote data processing apparatus. The analysis steps are then performed by the remote data processing apparatus.

The biomaterial can comprise food material and the onsite image data generation may be performed in a stage of a food production chain.

Data based on the results of the analysis can be communicated from the data processing apparatus. For example, the data processing apparatus may communicate a report of the composition and/or purity of the material etc. to a user device, and/or a database and/or a regulator, and/or any third party who is allowed to have access to the data.

The result of the analysis can comprise a digital certificate containing predefined analytical data. The certificate can be communicated back to the locally operable apparatus. The local apparatus may comprise a display for presenting the results. It is also possible to print a hard copy of the certificate. The certificate or other indication of the results can also be communicated elsewhere, for example a user device such as a smartphone or a laptop or a desktop computer of the operator of the local apparatus, a regulatory authority and/or a database of the certificates, and so on.

The test results, such as digital certificates or test reports can be stored and managed by a third-party service provider. The test results, such as digital certificates or reports can also be stored in a distributed ledger such as public or private blockchain for increased integrity and trust. Instead of each party taking their own samples and performing separate testing a single test by a party is thus possible. Data structure can be provided to store results for historical analytics.

The above examples can enable efficient supply chain decisions. Rapid sample-to-result workflow can be made available in hours or even less rather than days. This enables time critical supply chain decision making. For raw material procurement advantage can be provided as raw material quality and pricing can be reliably determined by the varietal purity and homogeneity of the grain lots. Instead of a sample being assessed based on manual and subjective identification of varieties based on geometrical features the assessment can be made objectively based on image data and a classification mechanism that is based on trained artificial intelligence. This can be particularly advantageous in food industry where raw material can form a significant cost block and errors in grain lot assessment can have significant quality and cost implications.

An image data based analysis system as described above can also be used as basis for a decision engine of a continuous testing system and/or a biomaterial processing system, for example controlling an optical material sorting system or a material processing system.

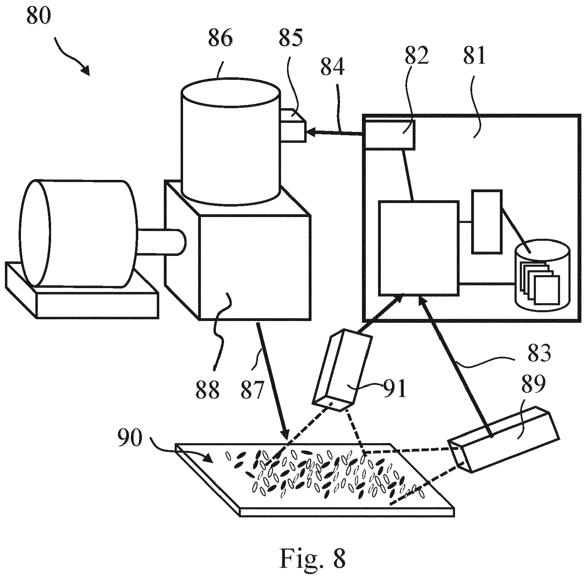

In accordance with an example schematically shown in Figure 8 outcome of the analysis can be used in controlling at least a part of a product delivery and/or manufacturing process. A process adjustment can be provided by the shown testing and control loop arrangement where, e.g., blending of raw materials is responsive to the analysis based on image data.

In Figure 8 example a production system 80 comprises a processing apparatus, e.g., a milling and/or blending apparatus 88. A raw material input chute 86 is controlled by a controller 85. The controller 85 is configured to adjust the relative amounts of different materials, i.e., the blend of the material fed into the processing apparatus 88. The control is based at least in part of a control signal 84 from a data processing apparatus 81 configured to perform the above described image data based material analysis. The analysis apparatus 81 generates control signal 84 based on image data signal 83 from digital image data generating camera apparatus 89. The camera apparatus 89 is configured to capture images of samples 87 supplied from the processing apparatus 88 on the imaging area 90. The control signal 84 is transmitted via interface 82 to the controller 85 of the processing apparatus based on the results of the analysis. The analysis apparatus 81 can be provided onsite the processing facility or by a remote data processing apparatus as described above.

Figure 8 shows also the possibility of using imaging system comprising at least two separate cameras 89 and 91. Image data generation by multiple cameras can be advantageous in generating more accurate image data with higher resolution image data based on multidimensional views of the components in the sample. Multiple cameras can also be used in an onsite testing apparatus as discussed above.

The raw material feed into of the processing apparatus 88 can be controlled at least in part based on the closed loop of sampling and process control via signals 83 and 84. This enables processing operations, for example blending, packaging and so forth of food materials to adjust rapidly the blend of different varieties based on the sampling.

The herein described digital image data and AI based method to quantify composition can be used remove a source of error in the composition. The blends can be based well to the specifications based on relative rapid analysis and without laboratory testing as the result can be input into the blending control system directly. Similarly, e.g., when packaging of other food products substantially rapid and accurate feedback data regarding the compositions of the raw materials may be provided. An end product certificate of authenticity may be provided efficiently and rapidly. Raw material blending process adjustment can be beneficial, e.g., where an end product contract has been set based on an agreed composition of grain varieties at the end product. Adaptive adjustment of blending of different varieties can be based on the machine vision aided identification of varieties based on their geometrical features. Samples can be taken during the blending operation and analysed to confirm that these meet the specifications. The samples can be taken frequently when the process is in operation. The looped control system can advantageously provide more efficient operation and better use of raw materials. For example, unnecessary blending of pricier or "too good" grain varieties at a level more than specified to be on the safe side can be avoided, and more stable end product quality obtained.

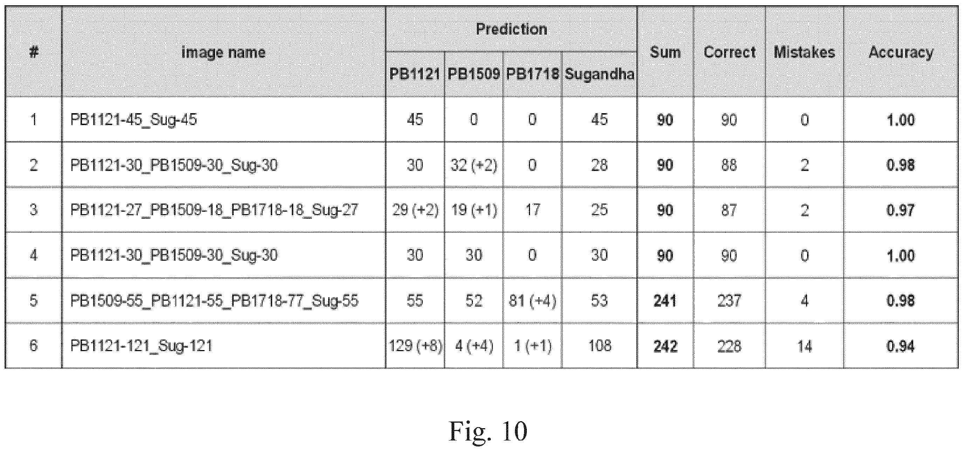

Figures 9 and 10 show results of tests where deep learning classification algorithm were used for the analysis. The material samples tested contained rice grain varieties shown in Figures 4A to 4D. As shown in Figure 9 the algorithm identified and clearly distinguished the four groups of rice grain varieties. Figure 10 shows numerical data of results of analysis of six images. The column *Prediction* lists the results of the analysis per each image and grain variety. Column *Sum* gives the number of grains identified, column *Correct* the correctly classified and *Mistakes* the incorrectly classified grains. The amount of mistakes is relatively low and the *Accuracy* column shows that accuracy from 0.94 to 1.0 was achieved for the images.

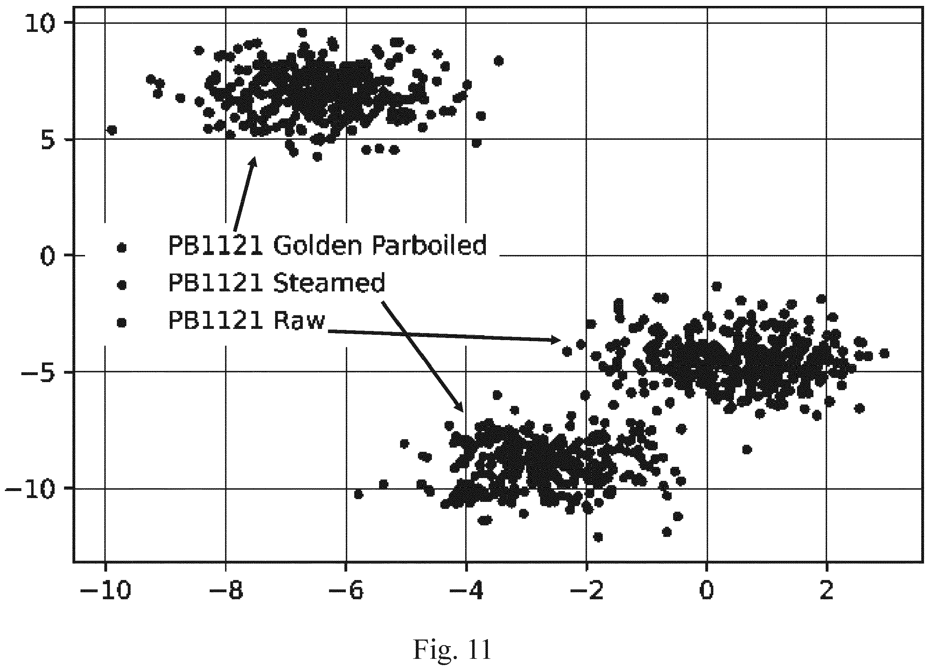

Figure 11 shows the results for testing of images of differently processed rice grains of Figures 5A, 5B and 5C. Again, clearly distinguished groups of raw rice, steamed rice and golden parboiled rice were obtained as result of the analysis. The accuracy of the process type based classification of ten analysed samples varied from 0.94 to 1.0.

Efficient and rapid sample-to-result analysis may be provided. Errors due to spoiled or contaminated samples and/or handling and laboratory and human errors may be reduced. Raw material procurement and/or pricing may be determined based on the varietal purity and homogeneity of the lots.

A digital platform can be arranged to collaborate between various parties to reduce the overall testing costs and testing equipment. For example, buyers and sellers and possible middlemen can avoid performing similar tests to confirm quality, and instead refer to the database where result of testing by one of the parties is available.

It is noted that although the above detailed examples have been described with reference to certain applications there are several variations and modifications which may be made to the disclosed solution without departing from the scope of the present invention. In particular, the different embodiments have been described as examples. Different features from different embodiments may be combined.

Specific software can be provided for the control of the onsite apparatus. Continuous online monitoring of the onsite apparatus, for example its working conditions may be provided.

Artificial intelligence (Al) based visual classification algorithms can be applied in the inspection to make a phenotypical classification of a sample of grains and biomaterial in general. Basmati rice is discussed in this disclosure as a particular example of biomaterial that can be subjected to AI based analysis of phenotype. However, similar principles can be applied to other biomaterials, for example wheat, berries, fruits, nuts, beans and so on.

In general, some embodiments may be implemented in hardware or special purpose circuits, software, logic or any combination thereof. For example, some aspects of the apparatus may be implemented in hardware, while other aspects may be implemented in firmware or software which may be executed by a controller, microprocessor or other computing device, although embodiments are not limited thereto. While various embodiments may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments may be implemented by means of computer software stored in a memory and executable by at least one data processor or by hardware, or by a combination of software and hardware. Further in this regard it should be noted that any of the above procedures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may include one or more of computers, microprocessors, digital signal processors (DSPs), application specific integrated circuits (ASIC), gate level circuits and processors based on multi core processor architecture, as non-limiting examples.

While certain aspects of the invention may be illustrated and described as block diagrams, flow charts, or using some other schematic pictorial representation, it is well understood that these blocks, apparatus, systems, techniques and methods described herein may be implemented at least in part in, as non-limiting examples, hardware, software, firmware, special purpose circuits or logic, general purpose hardware or controller or other computing devices, or some combination thereof.

The foregoing description provides by way of exemplary and non-limiting examples a full and informative description of exemplary embodiments of the invention and means for performing it. However, various modifications and adaptations may become apparent to those skilled in the relevant arts in view of the foregoing description, when read in conjunction with the accompanying drawings and the appended claims. All such and similar modifications of the teachings of this invention will still fall within the spirit and scope of this invention.

## Claims

1. A method of analysing biomaterial, the method comprising:
acquiring image data of a biomaterial sample from an image data generating apparatus,
determining information of components of the biomaterial sample based on phenotypical classification of the image data using an artificial intelligence based visual classification algorithm, and
generating information of contents of the biomaterial sample based on the phenotypical classification.

2. The method according to claim 1, comprising identifying individual components in the image data of the biomaterial sample for separated analysis of the components.

3. The method according to claim 1 or 2, wherein the image data is generated in an onsite location, the method comprising receiving the image data from the onsite location at a remote data processing apparatus and performing the analysis steps at the remote data processing apparatus.

4. The method according to claim 3, comprising sending information of the composition of the biomaterial sample to the onsite location.

5. The method according to any preceding claim, comprising at least one of generating a digital certificate based on the analysis of the biomaterial sample, generating a digital report based on the analysis of the biomaterial sample, and storing into a database information generated for the biomaterial sample based on the analysis.

6. The method according to any preceding claim, comprising training the visual classification algorithm using a library of prelabelled images of possible components of the biomaterial sample.

7. The method according to any preceding claim, comprising generating training data for the visual classification algorithm based on DNA testing of possible components of the biomaterial sample.

8. The method according to any preceding claim, wherein the image data generating apparatus comprises a flatbed scanner and/or at least one digital camera.

9. The method according to any preceding claim, wherein the biomaterial comprises food material and the image data is captured onsite in a stage of a food production chain.

10. The method according to any preceding claim, comprising generating an input signal for a controller of a biomaterial processing system based on the results of the analysis and controlling the processing system at least in part based on the input signal.

11. An apparatus for analysing biomaterial, the apparatus comprising at least one processor and at least one memory including a computer program code, the at least one memory and computer program code configured to, with the at least one processor, cause the apparatus at least to:
acquire image data of a biomaterial sample from an image data generating apparatus,
determine information of components of the biomaterial sample based on phenotypical classification of the image data using an artificial intelligence based visual classification algorithm, and
generate information of contents of the biomaterial sample based on the phenotypical classification.

12. The apparatus of claim 11, wherein the image data generation apparatus is provided in an onsite location, and the apparatus is configured to receive the image data from the onsite location, perform the analysis steps, and communicate data based on the analysis to at least one of the onsite location, a database and a data processing device in a third location.

13. The apparatus of claim 11 or 12, wherein the image data generating apparatus comprises a flatbed scanner and/or at least one digital camera.

14. The apparatus according to any of claims 11 to 13, configured to generate an input signal for a controller of a biomaterial processing system based on the results of the analysis, wherein the processing system is controlled at least in part based on the input signal.

15. The apparatus according to any of claims 11 to 14, configured to identify individual components in the image data of the biomaterial sample for separated analysis of the individual components.
